# EUROPEAN PATENT APPLICATION

(11) **EP 3 009 586 A1**
(43) Date of publication of application: **20.04.2016**
(21) Application number: 15188605.8
(22) Date of filing: 06.10.2015
(51) Int. Cl.: E05D 7/04, E05D 5/04

(54) **A MOVING HINGE MECHANISM**

(30) Priority: 15.10.2014 TR 201412097
(71) Applicant: Heksagon Muhendislik ve Tasarim Anonim Sirketi, Istanbul (TR)
(72) Inventor: AYDIN, TARIK, KOCAELI (TR)
(74) Representative: Dericioglu Kurt, Ekin

(57) **Abstract**

The present invention relates to a moving hinge mechanism (1) that enables mounting of parts such as service doors and trunk lids, which are used particularly in vehicles and are mounted subsequently, at an appropriate distance with the fixed panels; and basically comprises at least one body (2), and an adjustment member (3), which enables to move the part to be mounted by 360° in order to adjust the distance of the panel or door-lid to be mounted with respect to the fixed panels, and which prevents slipping after adjustment thanks to the fact that one surface thereof is knurled.

## Description

### Field of the Invention

The present invention relates to a moving hinge mechanism, which can be used in every system in which it is required, and which enables connection of panels or covers (doors-lids) to fixed panels and pieces in the frame or body.

### Background of the Invention

In the current art, especially in commercial vehicles, the outer body of the vehicle is comprised of panels, and these panels are mounted to the vehicle frame. After the fixed panels are mounted, the service doors and trunk lids are mounted. In mounting of these doors-lids, the most critical part is to ensure that the distance of the door-lid with the side panels is appropriate.

The service doors and trunk lids are the last pieces to be mounted in the process of vehicle assembly. These pieces are positioned according to the fixed panels on the body of the vehicle which is assembled. During this positioning, the service door is moved towards the desired direction.

A slotted form is used in the hinges of service doors and trunk lids in order to maintain the distance between the service doors and trunk lids and the fixed panels. By means of this form, the service door can be moved upwards - downwards while the hinge remains fixed. Thus the distance with the fixed panels can be adjusted. After the adjustment is performed, the door-lid is enabled to be fixed by tightening the screw within the slot.

The Unites States patent document no. US6286185B1, an application in the state of the art, discloses a hinge which can be adjusted to the desired position and which, when the adjustment is completed, s fixed by tightening the screw. The said hinge is comprised two parts like a butterfly. The said document discloses that a quadratic or oval cross-member used with the screw compensates the impact to the cover thereby preventing the cover from being damaged.

The Chinese utility model document no. CN202064752 U**,** an application in the state of the art, discloses a hinge mechanism developed for adjusting the gap between the door and vehicle body panel in vehicle door mounting. The said mechanism comprises a vehicle door hinge, a vehicle body panel and a mounting bolt. A washer is arranged between head parts of the vehicle door hinge and the mounting bolt in order to adjust the door gap. The washer does remain fixed during gap adjustment and is fixedly connected with the hinge after adjustment is completed. Adjustment position is fixed since the internal diameter of the washer is less than the internal diameter of the hinge mounting hole.

The systems used in the current art are not easily adjustable or mountable, and do not provide an adequate solution.

### Summary of the Invention

An objective of the present invention is to provide a moving hinge mechanism that enables mounting of parts such as service doors and trunk lids, which are used particularly in vehicles and are mounted subsequently, at an appropriate distance with the fixed panels.

Another objective of the present invention is to provide a moving hinge mechanism which allows the part to be mounted to be moved 360 degrees and to be adjusted.

A further objective of the present invention is to provide a moving hinge mechanism which prevents slipping after the hinge is fixed by means of the knurled structure in the adjustment system.

### Detailed Description of the Invention

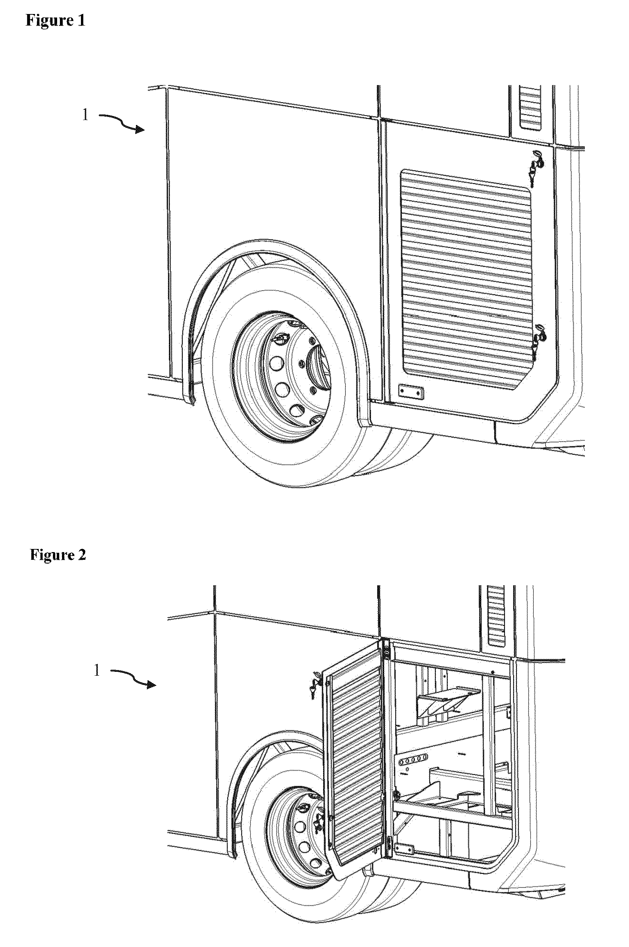

A moving hinge mechanism developed to fulfill the objective of the present invention is illustrated in the accompanying figures wherein
Figure 1. is a view of the gap between the door-lid that will be mounted and the fixed panel.
Figure 2. is a view of the open form of the door-lid/panel to be mounted.
Figure 3. is a front view of the moving hinge mechanism of the present invention as mounted on the door-lid.
Figure 4. is a rear view of the moving hinge mechanism of the present invention as mounted on the door-lid.
Figure 5. is a view of the moving hinge mechanism of the present invention.
Figure 6. is a front view of the moving hinge mechanism of the present invention.

The components shown in the figures are each given reference numbers as follows:
1. Moving hinge mechanism
2. Body
3. Adjustment member
4. Connection member
5. Connection rod

The moving hinge mechanism (1) of the present invention basically comprises:
- at least one body (2),
- at least one adjustment member (3) which is used for adjusting distance of the part to be mounted to the other fixed parts,
- at least one connection member (4) which prevents movement of the adjustment member (3) by fixing it after distance adjustment is completed by being passed through the holes provided on the adjustment member (3),
- at least one connection rod (5) which is located on the body (2) and which enables connection of the hinge to the fixed panel.

In the moving hinge mechanism (1) of the present invention, firstly the part to be mounted and the hinge assembly in door-lid/panel mounting are mounted to the body. Thus the hinge assembly is stably mounted. The connection member (4), which is attached to the body (2) and is located on the adjustment member (3), is loosened. Upon loosening of the connection member (4), the adjustment member (3) acquires the ability of rotating 360° and thus the part that is mounted can be moved towards the desired direction. When the desired position is attained, the connection member (4) is fixed and mounting is completed.

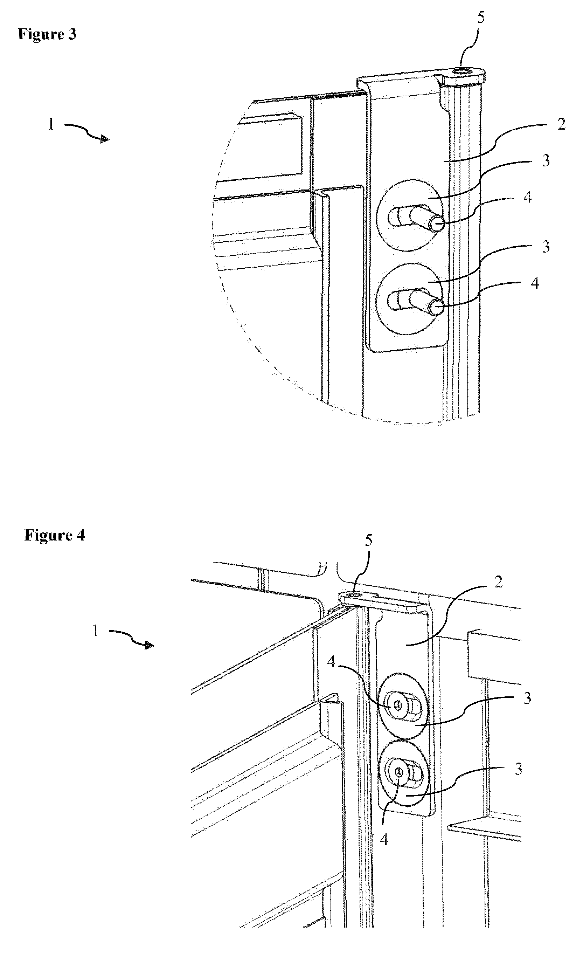

The body (2) is a plate, which is preferably made of a metal material, and which carries and holds together all parts of the hinge assembly and is seated on the area where mounting will be performed. In one embodiment of the invention, the body (2) is in the form of a rectangular prism and one end curves upwards such that it is perpendicular to the surface of the plate. In a preferred embodiment of the invention, the flat area of this curved part is placed on the door-lid or panel that will be mounted, and the connection rod (5) provided on the body (2) is fitted into the vertical gap/hole on the mounting area. This way, the hinge assembly provides connection between the mounting area and the part to be mounted (Figure 3).

The connection rod (5) is preferably cylindrical and its sizes may vary according to the parts to be mounted. It is important that the sizes of the side panel gap and the sizes of the connection rod are compatible with each other. The hinge assembly is connected to the side panel upon fitting the connection rod (5) preferably into the fixed side panel gap at the mounting area. Right-left movement of the hinge assembly is hindered by fitting the connection rod (5) to the panel gap.

Although the connection rod (5) is a cylindrical rod fixedly mounted on the body (2), it may also be mounted such that it will be compatible with the design and will not hinder mounting of other panels.

In order for the adjustment member (3) not to slip when the connection member (4) is being tightened, surfaces of the adjustment member (3) contacting the body (2) are rough. Thus friction effect increases and the adjustment member (3) cannot move within the slot it is fitted in.

In one embodiment of the invention, the adjustment member (3) is mounted by being passed through the holes on the body (2). The adjustment member (3), whose both sides are flat, does not form a protrusion when mounted on the body (2), and thus the other vehicle parts are prevented from bumping into it and visual aesthetics is maintained.

The surface of the adjustment member (3) seen from outside after it is mounted is flat and smooth. The surface of the adjustment member (3) contacting the door-lid that will be mounted has a knurled structure. Thus, when the connection member (4) is being tightened for fixing the hinge, the friction force between the adjustment member (3) and the surface of the door-lid which will be mounted increases and the adjustment member (3) is prevented from slipping.

In one embodiment of the invention, the connection members (4) are passed through the almond-shaped holes provided on the adjustment member (3) and when the adjustment is completed the hinge is fixed by tightening the connection members (4).

In the moving hinge mechanism (1) of the present invention, the part to be mounted is rotated 360° and adjusted by means of the adjustment member (3). The adjustment members (3) in the prior art allow only upward and downward movement of the panel to be mounted. The new adjusting member (3) allows upwards-downwards and right-left movement of the panel.

In one embodiment of the invention, the connection member (4) is a screw. Preferably the head of the screw which is the connection member (4) remains under the adjustment member (3) while the shank goes out of the adjustment member (3).

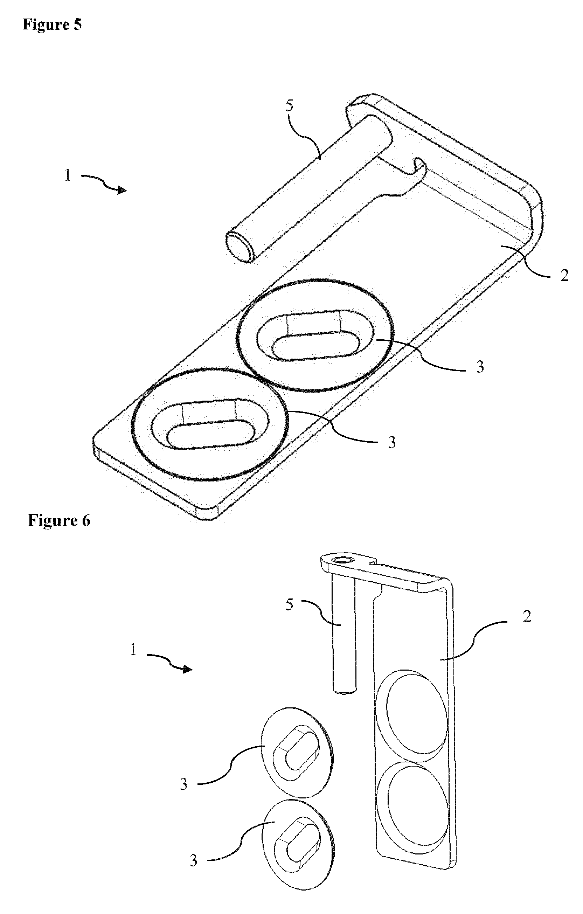

In a preferred embodiment of the invention, while a region of the flat surface of the body (2) extending perpendicular to the surface of the plate is fitted on the part to be mounted, the connection rod (5) is mounted to the other region of thereof. The flat surface to which the connection rod (5) is mounted remains out of the body (2); the connection rod (5) does not intersect with the body (2) (Figure 5). The connection rod (5) lies parallel to the body (2) surface.

It is possible to develop a wide variety of designs of the moving hinge mechanism (1) of the present invention. The invention cannot be limited to the examples described herein and it is essentially as defined in the claims.

## Claims

1. A moving hinge mechanism (1) that enables mounting of parts such as service doors and trunk lids, which are used particularly in vehicles and are mounted subsequently, at an appropriate distance with the fixed panels; basically **characterized by**
- at least one body (2) which houses the parts provided on the hinge assembly and which holds them together,
- at least one adjustment member (3), which is used for adjusting distance of the part to be mounted to the other fixed parts, and whose surface that will contact the surface to be mounted is rough,
- at least one connection member (4) which fixes the hinge by being passed through the adjustment member (3) and tightened after distance adjustment is completed,
- at least one connection rod (5) which is located on the body (2) and which enables fixed connection of the hinge.

2. A moving hinge mechanism (1) according to Claim 1, **characterized by** the body (2), on which the adjustment member (3) is mounted through holes provided thereon.

3. A moving hinge mechanism (1) according to Claim 1 or Claim 2, **characterized by** the body (2), which is in the form of a flat plate, and whose one end curves upwards, and wherein the flat part of the curved end is seated on the panel or door-lid that will be mounted.

4. A moving hinge mechanism (1) according to Claim 1, **characterized by** the adjustment member (3), which is prevented from slipping by means of the friction force resulting in between when the connection member (4) is tightened due to the fact that its surface contacting the panel/door-lid to be mounted is rough.

5. A moving hinge mechanism (1) according to Claim 1, **characterized by** the adjustment member (3), which acquires the ability of rotating 360° when the connection member (4) provided thereon is loosened.

6. A moving hinge mechanism (1) according to Claim 5, **characterized by** the adjustment member (3), which, by means of it movement ability, enables to move the part to be mounted by 360° and to adjust it.

7. A moving hinge mechanism (1) according to Claim 6, **characterized by** the adjustment member (3), on which connection members (4) are fitted through the almond-shaped holes provided thereon.

8. A moving hinge mechanism (1) according to Claim 1, **characterized by** the connection member (4), which fixes the adjustment member (3) at the desired position after the distance adjustment with the adjustment member (3) is completed.

9. A moving hinge mechanism (1) according to Claim 8, **characterized by** the connection member (4), which is in the form of a screw, and wherein the large diameter head thereof remains under the adjustment member (3) and the shank goes out of the adjustment member (3).

10. A moving hinge mechanism (1) according to Claim 1, **characterized by** the connection rod (5), which is mounted to the flat surface out of the body (2) on the flat part of the body (2) curving upwards, and which lies parallel to the plate surface.
